# EUROPÄISCHE PATENTSCHRIFT

(11) **EP 1 807 645 B1**
(45) Veröffentlichungstag und Bekanntmachung des Hinweises auf die Patenterteilung: **20.01.2010**
(21) Anmeldenummer: 04790402.4
(22) Anmeldetag: 14.10.2004
(51) Int. Cl.: F16L 1/036, E03F 3/06

(54) **VERFAHREN ZUM BETRIEB EINER VERBAUMASCHINE ZUR ROHRVERLEGUNG, SOWIE VERBAUMASCHINE SELBST**
METHOD FOR OPERATING A SHEETING MACHINE FOR LAYING PIPES, AND SHEETING MACHINE
PROCEDE D'UTILISATION D'UNE MACHINE DE BOISAGE POUR LA POSE DE CONDUITES ET MACHINE DE BOISAGE

(43) Veröffentlichungstag der Anmeldung: 18.07.2007
(73) Patentinhaber: Pipetrain International Ltd., 36 Wood Street Wakefield, West Yorkshire WF1 2HB (GB)
(72) Erfinder: LAUSCHER, Manfred, 52156 Monschau Rohren (DE)
(74) Vertreter: Schmidt, Karl Michael
(86) Internationale Anmeldenummer: PCT/EP2004/011543
(87) Internationale Veröffentlichungsnummer: WO 2006/042563

(56) Entgegenhaltungen:
- DE-A1- 10 130 777
- US-A- 3 608 319
- US-A- 3 986 568
- US-A1- 2004 190 995
- US-B1- 6 364 036

## Beschreibung

Die Erfindung betrifft ein Verfahren zum Betrieb einer Verbaumaschine zur Rohrverlegung, sowie eine Verbaumaschine selbst. gemäß Oberbegriff der Patentansprüche 1, und 7.

Verfahren und Einrichtungen dieser Art werden zum Verlegen von Kanalisationsrohren oder aber auch von Rohren anderer Art, verwendet. In älteren Baumaßnahmen wurde am offenen Schacht gearbeitet. Dies bedeutet, dass in einem beispielsweise zu erschließenden Baugebiet ein entsprechender Graben mit einigen Metern Tiefe mittels Bagger ausgehoben wird, wobei der Graben nach oben hin trichterförmig sich erweiternd ausgebildet ist, und die Neigung der Seitenflächen sich aus der Untergrundbeschaffenheit und der daraus resultierenden Naturböschung ergibt. Insgesamt entsteht dabei ein Graben, der bei einer Gesamttiefe von 3 m bereits mehr als 8 m in der Breite messen kann. Ein solches Verlegeverfahren wird in der Fachsprache Verlegung am offenen Schacht bezeichnet.

Aus diesem Grund ist es weiterhin bekannt, am halboffenen Schacht zu arbeiten, wobei die Seitenflanken des Schachtes mit sog. Verbautafeln fixiert werden. Damit entsteht ein deutlich schmalerer Graben.

Weiterhin ist es bekannt, lediglich einen schmalen, ggfs schmaler als der zu verlegende Rohrdurchmesser, mit Verbautafeln gesicherten Graben herzustellen, und unter dem Graben die Rohre mittels einer Vortriebspresse unter dem mit Verbautafeln gesicherten Bereich ins Erdreich zu pressen. Im letztgenannten Fall, sowie beim gänzlich geschlossenen Rohrvortrieb werden natürlich nur stationäre Pressstationen in der sogenannten Startgrube verwendet, wo auch nach jedem Vortriebshub neue Rohre eingelegt werden.

Ein altes Verfahren ist aus der DE 26 03 565 C2 bekannt. Hierbei wird in einer Baugrube, der sog. Startgrube die Vortriebspresse und das Vortriebswerkzeug eingebracht. Die Vortriebspresse wird dabei wegen der enormen, auftretenden Kräfte hydraulisch betätigt. Eine Presse, ein Druckausgleichsring sowie Gleitschienen und Druckausgleichsvorrichtungen werden hier in der Startgrube montiert, wobei somit die gesamte Pressenanordnung stationär dort installiert ist. Des weiteren wird ein Vortriebswerkzeug gemäß dem oben genannten Schneidschuh nach vorne gedrückt. Wird mit einem solchen Schneidhub die Länge eines zu verlegenden Leitungsrohres erreicht, so wird die Vortriebspresse in entgegengesetzter Richtung zurückgefahren, und von oben ein Leitungsrohr zwischen Vortriebspresse und Schneidschuh abgesenkt. Danach wird wieder die Vortriebspresse erneut ausgefahren, wobei das eingesetzte Leitungsrohr und der Schneidschuh nach vorne getrieben werden. Nach Erreichen einer weiteren Leitungsrohrlänge wird die Vortriebspresse wieder erneut zusammengefahren und das nächste zu verlegenden Leitungsrohr von oben eingelegt. Wie oben bereits beschrieben, wird das anfallende verdrängte Erdreich überirdisch von einer Fördereinrichtung, im allgemeinen von einem Bagger abgetragen.

Erfahrungsgemäß kommt es nach einer Strecke von 100-200 m zu enormen Gleitreibungskräften an dem bereits verlegten Rohrabschnitt, weil die Vortriebspresse eine immer länger werdende Gesamtrohrlänge vorzuschieben hat. Nach den besagten 100-200 m werden die möglichen Verlegemaximallängen erreicht. Hinzu kommt im übrigen eine enorme Druckbelastung auf das jeweils zuletzt verlegte Leitungsrohr, was die effektiven Kräfte abfangen muß, die das gesamte bereits verlegte Leitungsrohr nach vorne schieben. Grundsätzlich gewähren nicht alle Leitungsrohrhersteller eine solche Festigkeit, daß dies möglich ist.

Aus der DE 42 41 856 ist des weiteren bekannt, daß die Vortriebspresse mitlaufen ist, und zwar in der Art, daß das zuletzt verlegte Rohr als Widerlager für die Vortriebspresse genutzt wird, um einen weiteren Rohrabschnitt oder ein weiteres Leitungsrohr nach vorne zu schieben.

Grundsätzlich ergibt sich hierbei ebenfalls der Nachteil, daß auf die Rohre eine enorme Kraft in Axial-Richtung ausgeübt wird.

Um diesen Nachteil zu beseitigen ist ein Verfahren und eine Einrichtung gemäß der DE 101 30 777 A1 geschaffen worden, mit welchem durch eine Verlege- und Verbaumaschine sowohl der Schneidkopf als auch der Verbau in Verlegerichtung verschiebbar ist. Der Verbau schneidet sich dabei genauso voran wie der Schneidkopf mit dem verlegten Rohr. Dabei sind die Verbauplatten nicht nur nach vorne fahrbar und damit ins Erdreich schneidbar, sondern sie sind im stillstehenden Moment auch spreizbar, so dass der Rohrvortrieb seine Widerlagerkräfte zum Teil auf den Verbauplatten, zum Teil auf dem nach hinten wieder verfüllten und verdichteten Erdreich und nur noch zu einem kleinen Teil auf dem bereits verlegten Rohrabschnitt verteilt. Das verlegte Rohr wird dabei anders als im übrigen Stand der Technik weit weniger belastet.

Ausgehend von diesem genannten, an sich schon vorteilhaften Stand der Technik liegt der vorliegenden Erfindung die Aufgabe zugrunde, ein Verfahren sowie eine Einrichtung der gattungsgemäßen Art dahingehend zu verbessern, dass die Verlegung in einem höheren Mass automatisierbar ist, und zugleich die Einrichtung so betrieben wird, dass Schäden an der Einrichtung vermieden werden.

Die gestellte Aufgabe ist bei einem Verfahren der gattungsgemäßen Art durch die kennzeichnenden Merkmale des Patentanspruches 1 gelöst.

Weitere vorteilhafte Ausgestaltungen des erfindungsgemäßen Verfahrens sind in den abhängigen Verfahrensansprüchen 2 bis 6 angegeben.

Im Hinblick auf eine Einrichtung der gattungsgemäßen Art ist die gestellte Aufgabe erfindungsgemäß durch die kennzeichnenden Merkmale des Patentanspruches 7 gelöst.

Weitere vorteilhafte Ausgestaltungen hierzu sind in den übrigen abhängigen Einrichtungsansprüchen angegeben.

Kern der verfahrensgemäßen Erfindung ist, dass die Vorschubkräfte bzw die für den Vortrieb notwendigen Hydraulikdrücke der am Schneidschuh und innerhalb des Verbaus angeordneten Arbeitszylinder gemessen, und auf die Einbaulage jedes Arbeitszylinders bezogen aufgezeichnet werden, und die Drücke zwischen der linken und der rechten Verbauseite verglichen werden, und dass bei Asymetrie ausserhalb einer vorgebbaren Toleranz die Vortriebbewegung der Verbaumaschine automatisch gestoppt oder automatisch in die Steuerung der Schneidschuhpresse und/oder des Verbauvortriebes eingegriffen bzw eine Korrektursteuerung eingeleitet wird.

D.h. die Steuerbewegungen von Schneidschuh und Verbau werden immer aufeinander abgestimmt. Schneidschuh und Verbau werden zwar separat und jeweils einzeln gesteuert, aber beide werden dabei auf ein und dieselbe Zielrichtung gesteuert. Der Schneidschuh bewegt sich zwar im Vortrieb gemeinsam mit dem Verbau, aber beide unabhängig voneinander: Dies hat zur Folge, dass Fehlsteuerungen oder Erdreichdichteänderungen zu einer Abweichung zwischen Schneidschuhbewegung und Verbaubewegung führen kann. Genau diese Divergenz widerum erzeugt in der erfindungsgemäßen Weise eine Divergenz in den ermittelten Ortssignalen. Wird dies erkannt, so wird die Steuerung sofort in Steuerungskorrektur betrieben oder im Extremfall, wenn die Abweichung nicht mehr auszusteuern ist, wird die Verbaumaschine automatisch angehalten. In weiterer vorteilhafter Ausgestaltung ist vorgesehen, dass die Dichteasymetrien im Erdreich während des Vortriebes durch eine Korrelation von Hydraulikdruck- und Wegmessung ermittelt werden, derart, dass daraufhin optimierte Betriebsdrücke für die jeweiligen Arbeitszylinder des Schneidschuhs und des Verbaus ermittelt und ausgesteuert werden.

Weiterhin ist ausgestaltet, dass innerhalb des Verbaus ein Schneidschuh zum bodenseitigen Schneiden der nachfolgenden Rohrkontur sowohl gemeinsam mit dem Verbau als auch von demselben unabhängig gesteuert werden kann.

Mittels Sensoren an der vortriebsseitigen Spitze des Verbaus können querlaufende Hindernisse bereits aus einem vorgebbaren Abstand zur Verbaumaschine erfasst werden, und daraufhin die Verbaumaschine automatisch gestoppt werden.

Von erheblichem Vorteil ist eine Ausgestaltung, dass zwei übereinanderliegende Rohre verlegt werden, indem das untere Rohr an das ggfs bereits zuvor verlegte Rohr in den Zwischenraum zwischen Druck- und Schubplatte und der Verdichterplatte eingelegt wird, und das obere Rohr direkt oberhalb des ersten Rohres an das ggfs zuvor verlegte obere Rohr eingelegt wird, und zuerst das wiederverfüllte Erdreich um das untere Rohr mittels einer unteren Verdichterplatte und dann das Erdreich um und über dem oberen verlegten Rohr mittels einer oberen Verdichterplatte zusammengeschoben wird. Ebenso ist die Verlegung von zwei nebeneinanderliegenden Rohren möglich. Hierbei werden die beiden Rohre nebeneinander eingelegt und dann in jeweils einem gemeinsamen Hub von Druck- und Schubplatte sowie der Verdichterplatte berücksichtigt.

Von besonderem Vorteil ist hierbei, dass die Überwachung der hydraulischen Steuerkräfte/Steuerdrücke, die zu einer Bewertung des noch machbaren Schneidprozesses in Abhängigkeit zum geologischen Befund im Überlastfall eine automatische Korrektursteuerung oder eine Abschaltung der Maschine bewirken soll, gemeinsam mit der Tatsache dass die erfindungsgemäße Zylinderanordnung so angelegt ist, dass erheblich höhrere Kräfte aufgebracht werden können, bevor plastische Verbiegungen an der Verbaumaschine auftreten. Durch die erfindungsgemäße Integration der Zylinder in die Verbauplatten, anstatt diese an Winkeln auf denselben zu montieren, können erheblich höhere Vortriebkräfte auf den nunmehr ja auch vorzuschiebenden Verbau aufgebracht werden. Bei einer Fixierung der Zylinder an angeschweisten Winkeln würden bei der Krafteinleitung ausser den gewünschten Vorschubkräften parallel zu den Verbautafeln auch dazu lotrechte Biegekräfte auftreten. Diese werden durch die erfindungsgemäße Integration in die Verbautafeln völlig beseitigt und stellen somit bei der Aufbringung der enormen Schiebekräfte keine biegebruchgefährdeten Stellen mehr dar.

Dadurch dass nunmehr größere Kräfte auf die zu schiebenden Verbauplatten aufgebracht werden können und somit der Schneid- und Verlegeprozess nunmehr auch in festerem dichterem Erdreich vorgenommen werden kann, ist es besonders wichtig, dass die Grenzbelastbarkeiten des Materials eingehalten werden bzw auf komfortable und selbstkontrollierende Weise automatisch eingehalten werden können. Werden in dieser funktionalen Kombination nunmehr Dichtehindernisse aufgrund von Gesteinsbrocken, oder sprunghafte Dichtezunahmen im Erdreich erkannt, indem die Zylinderdrücke auf die beschriebene erfindungsgemäße Weise insbesondere im Hinblick auf Kraft- bzw Druck-asymetrien überwacht werden, so erfolgt vor Überlastung eine automatische Abschaltung, oder wenn machbar ein automatischer Korrektursteuereingriff.

Hierbei ist nicht nur die Tatsache beachtlich; dass das Erdreich sich entlang der Verlegestrecke als immer dichter werdend herausstellen kann, was ja dann durchaus auch zu einer symmetrischen Druckerhöhung führen kann, und nicht zu einer asymetrischen. Dann wird auch in einem solchen Fall eine automatische Abschaltung generiert. Vielmehr noch sind solche Fälle kritisch, wo sich die erfindungsgemäße Verlege- und Verbaumaschine durch ein Erdreich bewegt, was an der linken Verbauplattenseite härter oder dichter ist als auf der rechten Verbauplattenseite. Auch kann der Schneidschuh, der die halbe, d.h. die untere Rohrkontur schneidet, aufgrund unterschiedlicher Erdreichgegebenheiten anders belastet werden und dadurch anderen Kräften ausgesetzt sein, als der darüberliegende Verbau. Ein solcher Fall würde auf die Verlege- und Verbaumaschine, und auf die Verbindungsteile zwischen Schneidschuhpresse und Verbau enorm hohe Biegekräfte erzeugen , die die Statik der gliederig aufgebauten Verbaumaschine und der Verbindungsteile stark belasten, ja beschädigen kann. Solche Asymetrien werden durch die erfindungsgemäße Verfahrensweise und die erfindungsgemäße Einrichtung automatisch erkannt und die Maschine gestoppt oder eine automatische Korrektursteuerung setzt ein, wobei nach automatischer Abschaltung fortan nur noch vorsichtig manuell gesteuert bewegt werden kann, solange, bis die Asymetrien wieder in einem vorgegebenen oder vorgebbaren Toleranzbereich sind.

Die weiteren Ausgestaltungen betreffen solche Details, die den erfindungsgemäß angestrebten automatischen Vortriebsprozess unter automatischer Berücksichtigung von mechanischen Grenzbelastungen unterstützt.

So ist weiterhin vorteilhaft ausgestaltet, die Relativbewegbarkeit der Schneidschuhpresse zum Verbau zu verriegeln. Damit wird dann die Schneidschuhpresse gemeinsam mit dem Verbau gefahren. Mit dieser Betriebsoption wird der gesamte Verbau samt Schneidschuhpresse verfahren. In vielen Betriebsfällen ist es von Vorteil, Schneidschuhpresse und Verbau einzeln vortreiben zu können. Wird zum Beispiel eine zuvor ausgefahrene Schneidschuhpresse vom Verbauvorschub wieder eingeholt, wird zwangsläufig dieser Verbau über die Befestigungsteile zur Schneidschuhpresse den Bewegungen und somit dem Verlauf des Schneidschuhes folgen müssen. Wird der Verbau vorgeschoben und die Schneidschuhpresse folgt dem Verbau, wird ebenso zwangsläufig über die Verbindungsteile die Schneidschuhpresse dem Verbau folgen müssen. Die zusätzliche Steuerung des Schneidschuhes selbst wird hiervon nicht berührt.
Auch ist vorteilhaft ausgestaltet, dass die Schneidschuhpresse durch Ausfahren in der . Z-Richtung, gemäß Zeichnung, die Druckübertragung auf die Schneidschuhspitze und/oder den Verbau, über die Druck- und Schubplatte auf die ggfs schon vorher verlegten Rohre ausübt, gleichzeitig aber auch als Widerlager und Stabilisierung für die Arbeitszylinder der Verdichterplatte wirkt.
Bei Verriegelung mit dem Verbau wirken die Kräfte der Schneidschuhpresse auf die Fortbewegung der gesamten Maschine.
Bei Entriegelung des Verbaues von der Schneidschuhpresse wirken sich die Vortriebskräfte in Richtung Y aus und drücken nur den Schneidschuh ins Erdreich.
Baulich, d.h einrichtungsgemäß liegt der Kern der Erfindung darin, dass die Vorschubkräfte bzw die für den Vortrieb notwendigen Hydraulikdrücke der am Schneidschuh und innerhalb des Verbaus angeordneten Arbeitszylinder über Sensoren gemessen und auf die Einbaulage jedes Arbeitszylinders bezogen elektronisch in einer Steuereinrichtung aufgezeichnet und die Drücke zwischen der linken und der rechten Verbauseite verglichen werden, und dass bei Asymetrie ausserhalb einer vorgebbaren Toleranz die Vortriebbewegung der Verbaumaschine automatisch gestoppt oder korrekturgesteuert wird.
Bezüglich der Einrichtung ist dabei ausgestaltet, dass die Dichteasymetrien im Erdreich während des Vortriebes durch eine Korrelation von Hydraulikdruck- und Wegmessung innerhalb der Steuerung berechnet werden, und die Wegmessung über optische, resistive oder Schallsensoren erfolgt.

Eine weitere vorteilhafte Ausgestaltung besteht darin, dass innerhalb der Verbaumaschine mindestens eine hydraulisch bewegbare Druck- und Schubplatte zur teilweisen widerlagernden Abstützung beim Vortrieb auf der bereits verlegten Rohrstrecke angeordnet ist, welche über Arbeitzylinder innerhalb des Verbaus vor- und rückwärts bewegbar ist bzw sind.

Zum geeigneten Ablass oder Durchlass von Wasser ist vorgesehen, dass innerhalb des Schneidschuhs eine öffenbare Schottwand integriert ist. Diese ist vorteilhaft, wenn zum Beispiel im Betrieb befindliche Kanäle mit der neuen Einrichtung überfahren und ausgewechselt werden müssen. Durch Öffnen der Schottwand können die Abwässer durch den Schneidschuh und die Schneidschuhpresse geleitet werden und durch die bereits verlegten neuen Rohre wieder abgeleitet werden. Ein Absperren oder Überpumpen ist dadurch nicht mehr erforderlich.

Ebenso ist innerhalb der Schub- Nerdichterplatte ebenfalls eine öffenbare Schottwand integriert.

In weiterer vorteilhafter Ausgestaltung ist vorgesehen, dass in der Verbaumaschine zumindest ein Teil der Arbeitszylinder innerhalb der Verbautafelwand integriert angeordnet sind. Dabei sind jedoch alle den Verbau bewegenden sowie auch die Verdichterplatte und die Schubplatte bewegenden Arbeitszylinder innerhalb der Verbautafeln integriert. Somit sind innerhalb der Verbauanordnung in demjenigen Abschnitt in den Rohre eingelegt werden, keine Arbeitzylinder mehr störend im Weg. Lediglich im Bereich des Schneidschuhes, also der Schneidschuhpresse sind innerhalb des Verbaus Arbeitszylinder angeordnet. Diese liegen jedoch ausserhalb desjenigen Abschnittes in den die Rohre eingelegt werden müssen. Somit stören diese dort nicht.

In weiterer Ausgestaltung ist vorgesehen, dass die Verbautafelwand aus mehreren gelenkig miteinander verbundenen Verbautafeln besteht, und dass die einzelnen Verbautafeln über die integrierten Arbeitszylinder kontrolliert und gesteuert bewegbar sind.

In besonders vorteilhafter Ausgestaltung ist angegeben, dass die Verbautafeln mit Injektionsöffnungen versehen sind, zur Einbringung von Schmierstoffen zwischen Schacht-Erdreich und Verbautafelaußenwandung mittels einer Schmierstoffdosiereinrichtung, die in Abhängigkeit zu den ermittelten, für den Vortrieb notwendigen Steuerdrücke der Arbeitszylinder, die besagten Schmierstoffe dosiert durch die Injektionsöffnungen befördern. Damit kann innerhalb der Steuerung erkannt werden, wann der Vortrieb schwieriger wird. Dies wird durch eine ermittelte. Erhöhung der hydraulischen Leistung automatisch erkannt. Bleibt die Erhöhung der für den Vortrieb notwendigen Leistung jedoch noch innerhalb der Toleranz, so werden zumindest automatisch die Injektionsöffnungen in den Verbautafeln angesteuert und es wird mehr oder weniger Schmierstoff bzw Tonpulver dosiert und eingespritzt. Das heisst, wird der Vortrieb beschwerlich dann wird mehr Schmierstoff dosiert und wird der Vortrieb wieder leichter, dann wird weniger Schmierstoff dosiert. Die Schmierstoffdosierung steht also in direktem Zusammenhang zu dem aus der Druck-Weg-Korrelations-Messung ermittelten Energieaufwand. Bevor nämlich wegen zu starker Klemmung des Verbaus im Schacht die Verbaumaschine zu früh angehalten wird, wird über die Steuerung automatisch versucht, die Reibungskräfte durch erhöhte Schmierstoffzugabe zu reduzieren. Über die besagte Steuereinheit kann auch dieser Vorgang vollautomatisch ablaufen.

Die Verwendung von Tonpulver als Schmierstoff bei einer Einrichtung oder einem Verfahren der Ansprüche 1 bis 5 ist dabei ein hervorragender Schmierstoff, wie sich in der Praxis gezeigt hat. Dieser ist besonders vorteilhaft im Zusammenhang mit dem Verbauvorschub, weil sich dadurch die notwendigen Widerlagerkräfte für den Vortrieb weiterhin verringern.

Eine besonders vorteilhafte, bereits oben angeführte Ausgestaltung ist die Integration der Zylinder für den Verbauvorschub in die Wandung der Verbautafeln. Dies hat sogleich eine Reihe von bedeutenden Vorteilen. Zum einen wird hierdurch eine deutliche Erhöhung der inneren lichten Weite zwischen den Verbautafeln erreicht, im Gegensatz zum Stand der Technik, wo diese Zylinder innerhalb des Verlegeraumes im Verbau angeordnet sind, bzw hineinragen, was das Einlegen der Rohre behindert.

Um bei Einrichtungen aus dem Stand der Technik die einzulegenden Rohre an den Zylindern vorbeizuführen, muss der Verbau entsprechend breit sein. Bei der vorliegenden erfindungsgemäßen Einrichtung hingegen kann die lichte Weite auf die zu verlegenden Rohrdurchmesser minimiert sein. Dadurch ist die erfindungsgemäße Einreichtung schmaler als Einrichtungen bekannter Art. Dies hat wiederum zur Konsequenz, dass weniger Erdreich bewegt werden muss, weil die erfindungsgemäße Einrichtung deutlich schmaler ist. Weniger Erdreichbewegung bedeutet weniger Energieaufwand, weniger Zeitaufwand und damit weniger Kosten.

Aus der integralen Anordnung der Hydraulikzylinder in die Wandung des Verbaues, bzw der Verbaumaschine, sind die Zylinder deutlich geschützter, und damit weniger störanfällig und sie werden durch die einzulegenden Rohre nicht mehr beschädigt. Ausserdem ist deren Widerlager zur jeweiligen Verbautafel in der Wandung integriert, wodurch dieses nicht mehr bruchgefährdet ist. Ausserdem sind keine Kipp- oder Hebelkräfte auf die Widerlager mehr vorhanden, weil die Hydraulikzylinder direkt innerhalb der Verbautafel ihre Widerlager haben. Damit können höhere Hydraulikkräfte eingeleitet werden. Damit kann besser in problematischem harten Untergund gefahren werden. Durch höhere Hydraulikdrücke lässt sich die Verbaumaschine auch schneller fahren. Auch hierbei wird die Anlage wieder schneller und die Rohrverlegung damit kostengünstiger.

Weiterhin besteht eine vorteilhafte Ausgestaltung darin, dass in den Verbautafeln und/oder im Schneidschuh und/oder im Verbauboden Öffnungen zum Anschluss von Wasserpumpmitteln vorgesehen sind. Dies gilt ebenso auch für die Aufsatzverbautafeln. Über diese Öffnungen kann Oberflächenwasser oder Grundwasser abgepumpt werden, die mit anderen separaten Pumpen nicht abpumbar wären.

Es kommt nunmehr auch zu einem vorteilhaften Zusammenwirken zwischen der erfindungsgemäßen Verfahrensweise, bei welcher über die Zylinderdrücke die Widerstände bzw wechselnde Widerstände im Untergrund feinfühlig ermittelt werden können. Durch die integrale Bauweise der Hydraulikzylinder in Verbindung mit dieser sensorischen Betriebsweise sind die Druckmessungen deshalb besonders zur Untergrund- und Erddichteerfassung geeignet, weil keine abgewinkelten Widerlager mehr für die Zylinder vorgesehen sind an denen Biegemomente das Ergebnis verfälschen können. Durch die direkte Krafteinwirkung auf die Verbauplatte können auch entsprechend direkt Reibungskräfteunterschiede direkt an der Verbauspitze gemessen und berücksichtigt werden.

Neben der Tatsache, dass bei Überschreitung eines Drucklimits die Anlage automatisch anhält oder_vpn automatischem Betrieb auf manuellen Betrieb umschaltet, ist ausserdem die Möglichkeit gegeben, die Verbaumaschine im Schneidprozess sogar hierüber zu lenken. Ein Lenken des Schneidschuhes ist zwar bisher bekannt, die Lenkbarkeit eines gegliedert aufgebauten Verbaues ist jedoch neu und in der Sache im Übrigen etwas völlig anderes als nur den Schneidschuh zu lenken. Die Steuerbewegungen des Verbaus und des Schneidschuhs werden immer korrelativ untereinander abgeglichen. D.h. wenn Abweichungen von der Strecke auftreten werden sofort automatisch die Arbeitszylinder so angesteuert dass sie dies ausgleichen bzw aussteuern, oder aber die Maschine anhalten.

Die erfindungsgemäße Einrichtung ist in der Zeichnung dargestellt und nachfolgend näher erläutert.

Es zeigt:
Fig. 1: erfindungsgemäße Einrichtung (Verbaumaschine) in Draufsicht
Fig. 2 Fig. 1 in Seitenansicht
Fig. 3 Draufsicht auf Schneidkopf
Fig. 4 Seitenansicht auf Aufsatzverbaumaschine
Fig. 5 Aufsatzverbaumaschine
Fig. 6 Frontalansicht auf Verdichterplatte
Fig. 7 Frontalansicht auf Schubplatte
Fig. 8 weitere Teilseitenansicht
Fig.9 Seitenansicht mit 2-facher Rohrverlegung übereinander.
Figur 10: Frontalsicht Verdichterplatte mit zweifacher Rohrverlegung nebeneinander.
Figur 11: Frontalsicht Druck- und Schubplatte mit zweifacher Rohrverlegung nebeneinander.

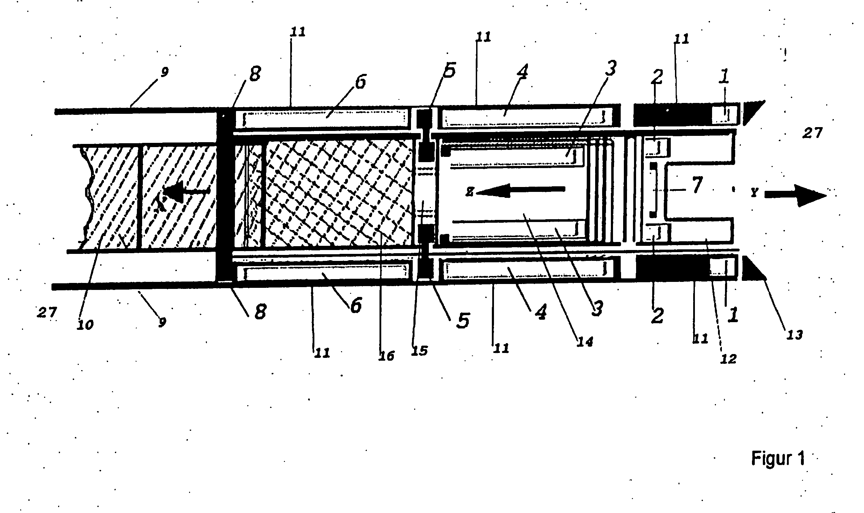

Figur 1 zeigt in Draufsicht, d.h. von oben in die Verbaumaschine hinein die wichtigsten Komponenten. An den beiden Seiten verlaufen gelenkig miteinander verbundene Hohlkörper-Verbautafeln 11. Innerhalb derer sind hydraulische Arbeitszylinder 1, 4, 6 integriert angeordnet D.h. diese Arbeitszylinder verlaufen innerhalb der Verbautafelwandung, und nicht wie bei bekannten Anordnungen innerhalb des durch die Verbautafeln gebildeten Innenraumes der Verbaumaschine. Durch die Integration in die Verbautafelwandung ist der gesamte durch die Verbautafeln gebildete Zwischenraum unbehindert für das Einlegen der Rohre und das Verfahren der Verdichterplatte und der Schubplatte. Keine Arbeitszylinder oder Haltelwinkel derselben stören dort. Dadurch ist es möglich den Verbauinneraum schlank und sehr eng am zu verlegenden Rohrmaß zu gestalten. Dadurch muss deutlich weniger Erdreich bewegt werden wodurch die Anlage auch schneller ist als bekannte Anlagen dieser Art.

Weiterhin werden durch die Integration der Arbeitzylinder in die Verbautafeln, die Kräfte ohne Kippmomente und somit optimal eingeleitet. Lediglich die Steuerzylinder 2 des Schneidschuhes 12, sowie die Hydraulikzylinder 3 der Schneidschuhpresse 14 sind innerhalb des Schneidschuhes 12 und der Schneidschuhpresse angeordnet.

Zwischen den aneinandergereihten Verbautafeln 11 sind die Schubplatte 5 und die Verdichterplatte 8 angeordnet. Diese werden durch die integrierten Arbeitszylinder betätigt. Die Schubplatte 5 wird von den integrierten Zylindern 4 betätigt und die Verdichterplatte 8 wird von den Arbeitszylindern 6 betätigt, die bei Betätigung ausfahren und entweder den Verbau segmentweise nach vorne schieben oder gegen das Erdreich widerlagernd abstützen, das Erdreich gleichzeitig verdichten und eine Kraftkomponente aufbringen die den Vortrieb des Verbaus bewirkt. Eine weitere aufgeteilte widerlagernde Kraftkomponente entsteht druch Abstützung auf dem bereits verlegten Rohr. Beim Schneidvorgang mittels Schneidschuh, bei dem nur die zu verlegende Rohrkontur geschnitten wird, erfolgt auch eine kräftemäßig aufgeteilte Abstützung auf dem Rohr und dem Erdreich. Eine weitere Abstützung beim Schneidvorgang kann die Spreizung der Verbautafeln innerhalb des Grabens bewirken.

Der Schneidschuh wird in Richtung Y bewegt, also in Vortriebsrichtung. Die Schneidschupresse 14 , d.h. deren Arbeitszylinder 3 fährt bzw fahren aber nach hinten, also in der angegebenen z-Richtung aus.

Die Verdichterplatte 8 wird in Richtung x der bereits verlegten Rohre 10 verfahren und verdichtet das dort wieder verfüllte Erdreich. Das heisst, der Erdaushub der durch den Schneidschuh 12 sowie auch durch die schneidenden vorderen Verbautafeln erzeugt wird, wird entnommen und hinten wieder verfüllt. Die Verbaumaschine fährt so wie ein Reissverschluss durchs Erdreich.

Die Vorderkante der vorderen Verbautafeln ist mit einer sogenannten Verbauspitzenpanzerung 13 versehen. Diese ist ausserdem angeschrägt, so dass nicht nur der Schneidschuh 12 ins Erdreich fährt, sondern auch der Verbau selbst. Dies heisst mit anderen Worten, dass der Grabenabschnitt geschnitten wird.

Innerhalb der Verbaumaschine ist in Draufsicht in dem Abschnitt in den die Rohre eingelegt werden der Verbauboden 16 zu erkennen, der eine bodenseitige Rohrhalbschale bildet, die das zu verlegende Rohr aufnimmt.

Weiterhin sind im Schneidschuh 12 sowie auch in der Druck- und Schubplatte 5 Schottwände 7 bzw 15, die zum Durchlass von anfallendem Wasser geöffnet werden können, damit kein Wasserdruck auf der Verbaumaschine steht.

Hinter der Verdichterplatte sind die sozusagen nachlaufenden hinteren Verbauplatten nur noch als Verbaubleche ausgeführt, die die Verdichtungskammerbilden.

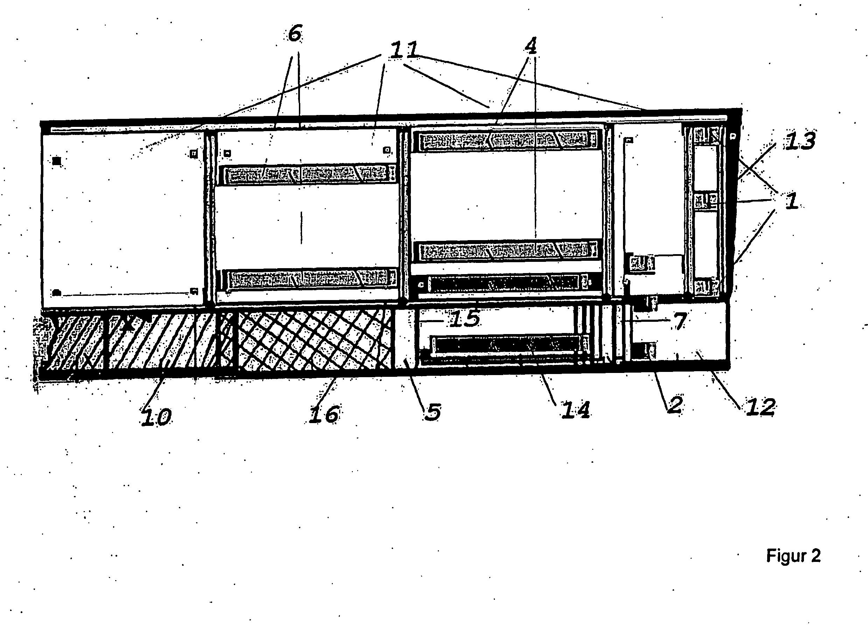

Figur 2 zeigt eine Seitenansicht der erfindungsgemäßen Verbaumaschine.
Bodenseitig ist zu erkennen, dass unterhalb der Verbautafeln 11 der Verbauboden 16 nur über einen Teilabschnitt der Verbaumaschine unten in etwa der halben Höhe eines Betonrohres 10 als Halbschale herausragt. Im Abschnitt davor ragt der untere Teil des Schneidschuhes 12 heraus. Dieser Teil gräbt sich im unteren Bereich durchs Erdreich. Im Bereich der Verbautafeln tun es die Verbautafeln selbst. Ebenfalls zu sehen ist ein Teil der Schneidschuhpresse 14. Der Schneidschuh selbst ist über Steuerzylinder 2 lenkbar. Im Bereich der in den Verbautafeln integrierten Arbeitszylinder 4 und 6 ist dieselbse transparent dargestellt, damit deren Positionierung zu erkennen ist.

Im vorderen Bereich sind die Verbautafeln 11 mit einer Auspanzerung 13 versehen, die die Vorderkante des Verbaues widerstandsfähig und hart zum Schneiden des Verbaus in das Erdreich beim Verbauvortrieb erhalten und schützen. Diese Auspanzerung 13 dient dabei als Schneide.

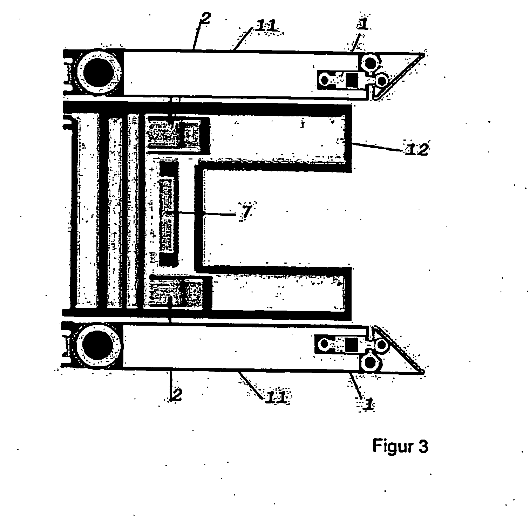

Fig. 3 zeigt im Detail nur den Schneidschuh 12 sowie die ihn umgebenden vorderen Verbautafeln 11. In der Verbauspitze, d.h. direkt hinter der Verbauspitzenpanzerung sind kleine Steuerzylinder 1, mit denen auch die Verbauspitze beim Vortrieb gelenkt werden kann. Ebenfalls ist die Schottwand 7 im Schneidschuh 12 zu erkennen, durch die anfallendes Wasser nach hinten geleitet werden kann.

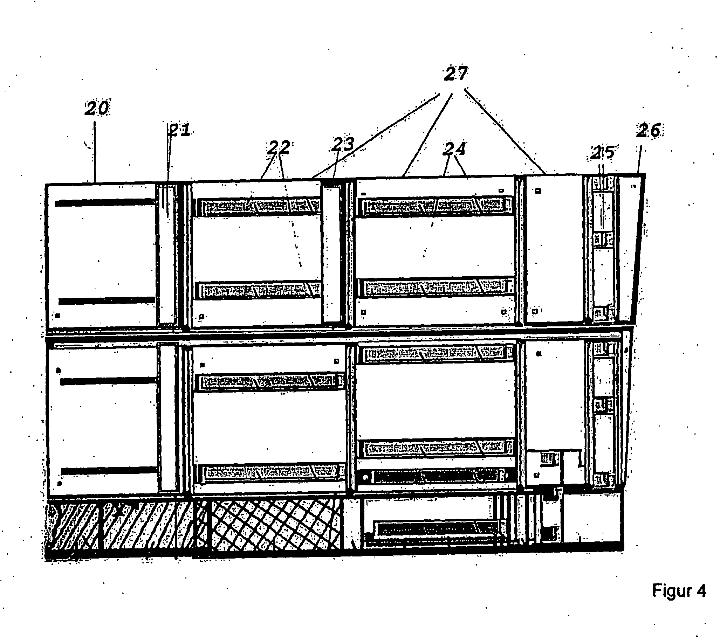

Figur 4 zeigt die Möglichkeit, den Verbau in der Höhe zu variieren. Hierzu sind Verbauaufsatztafeln 27 auf die gemäß Figur 2 zu erkennenden Verbautafeln aufgesetzt. Die Aufsatzverbautafeln 27 enthalten ebenso integrierte Arbeitszylinder 25, 24 und 23 sowie die in die Verbautafeln integrierten Arbeitszylinder zur Betätigung der ebenfalls nach oben verlängerten Aufsatzverdichterplatte 21 und der Aufsatzschubplatte 23.

Durch diese erfindungsgemäße Bauerweiterung nach oben, lassen sich Rohrverlegungen realisieren, bei denen die Grabentiefe tiefer liegt oder zwei Rohrleitungen übereinander gleichzeitig verlegt werden können. Die chronologische Betätigung der einzelnen Komponenten ist für die Verlegung von zwei Rohrleitungen oben bereits beschrieben.

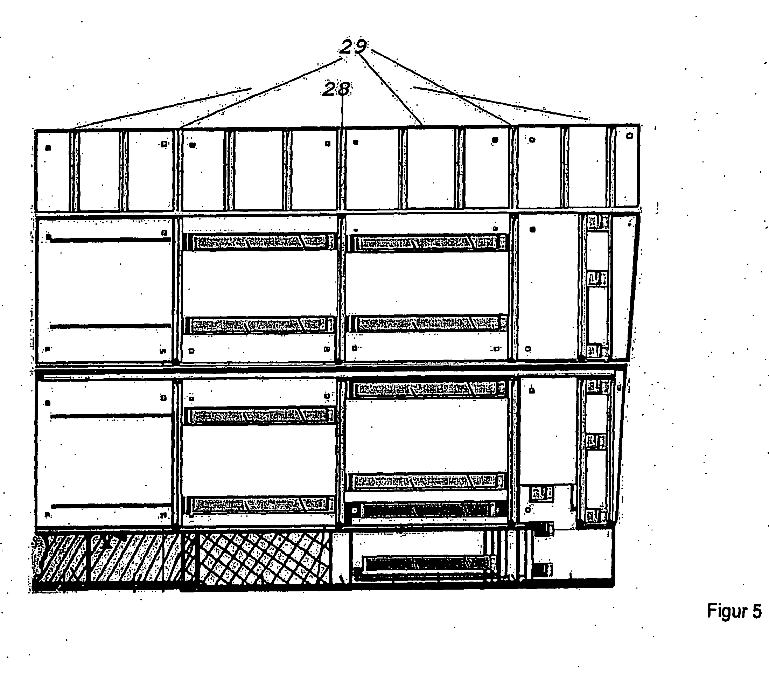

Figur 5 zeigt weitere demontierbare Aufsatztafeln 29, die dann notwendig werden, wenn bestimmte Tiefenmaße zu erreichen sind. Diese weiteren Aufsatztafeln-29 enthalten zwar keine Arbeitszylinder mehr, sind aber über zusätzliche Aussteifungen 28 stabilisiert.

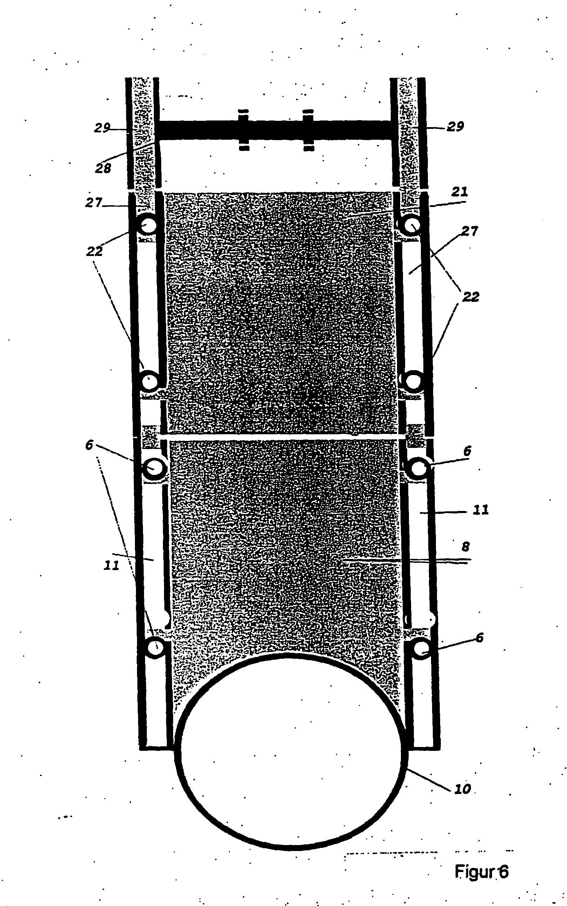

Figur 6 zeigt einen Schnitt durch die Verbaumaschine an der in Figur 1 mit-der Positionsnummer 8 dargestellten Positionen. Positionsnummer 8 ist die Verdichterplatte, die im Bereich hinter dem Verbauboden 16 gemäß Figur 1 angeordnet ist.
In diesem Beispiel gemäß Figur 6 ist eine Verbaumaschine gewählt, die bereits Verbau-Aufsatztafeln 27 hat, wie in Figur 5 in Seitenansicht zu sehen ist.
Demzufolge ist über der Verdichterplatte 8, die unten oberhalb der Rohrkontur des zu verlegenden Rohres 10 liegt, eine weitere Verdichterplatte, eine sogenannte Aufsatzverdichterplatte 21 vorgesehen. Diese wird über die in den Verbautafeln 11, 27 integrierten Arbeitszylinder betätigt, und komprimiert das hinten wiederverfüllte Erdreich, welches gleichzeitg dann auch als Teilwiderlager für den gesamten Vortrieb dient.
Ebenfalls sind hier auch die Aufsatzverbautafeln 29 zu erkennen, die beispielsweise zur Unterfahrung von Hindernissen benötigt werden. Bevor der hydraulisch vorgeschobene Verbau unter dem Hindernis hindurchgefahren wird, werden die Aufsatzverbautafeln entfernt, und nach Passieren des Hindernisses werden diese wieder aufgesetzt.

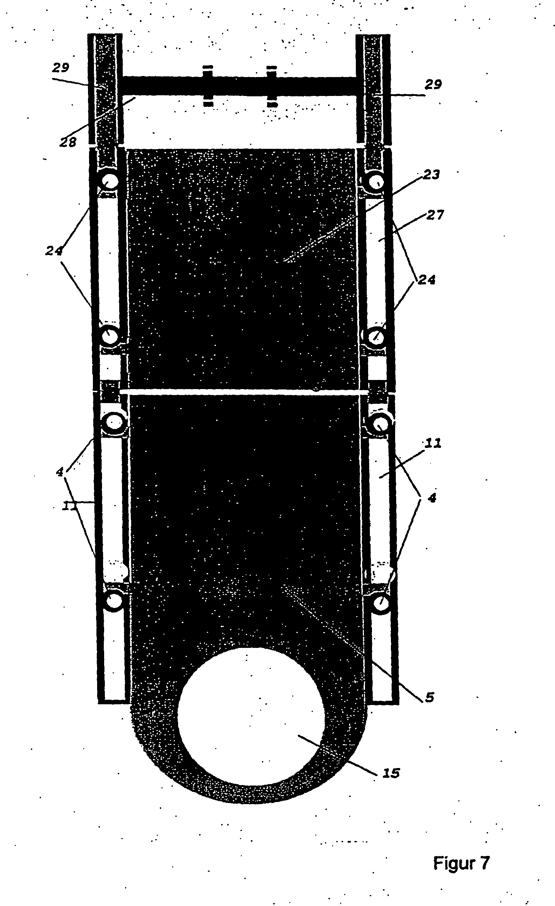

Figur 7 zeigt einen Schnitt durch die Verbaumaschine im Bereich der Druck- und Schubplatte 5, die im Verbau, wie bereits oben zu erkennen und beschrieben war, in dem Verbau geführt und darinnen aufgehängt sind. Diese wird ebenfalls durch die in den Verbautafeln sowie den Verbauaufsatztafeln integrierten Arbeitszylinder betätigt. Im unteren Bereich hat diese Druck- und Schubplatte 5 eine Durchlassöffnung 15 für das zu verlegende Rohr. Dabei wird bei der Druck- und Schubplatte die gesamte Rohrkontur umgriffen, weil davor der Schneidschuh positioniert ist.

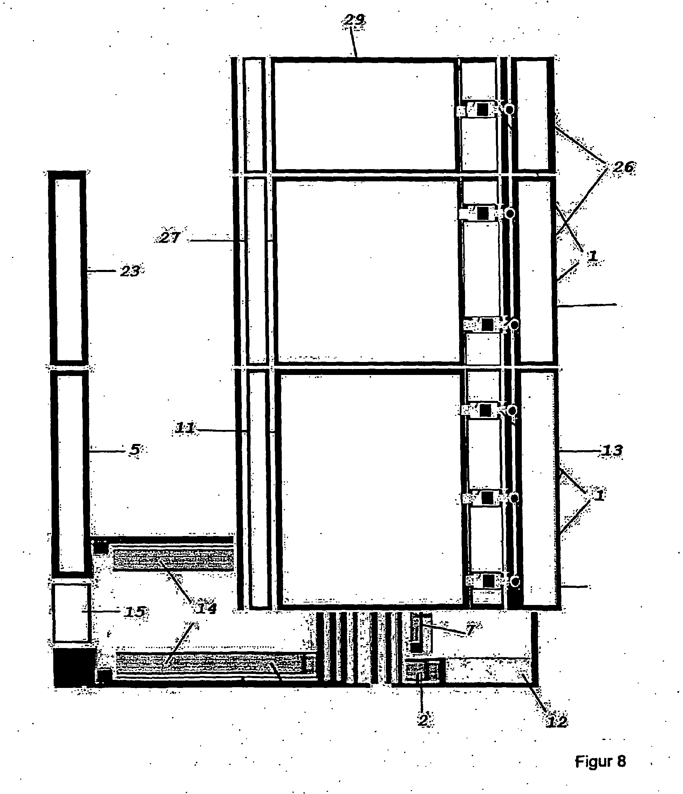

Figur 8 zeigt dabei die Relativbewegbarkeit des vorderen, vor der Druck- und Schubplatte 5 liegenden Verbautafelbereiches.

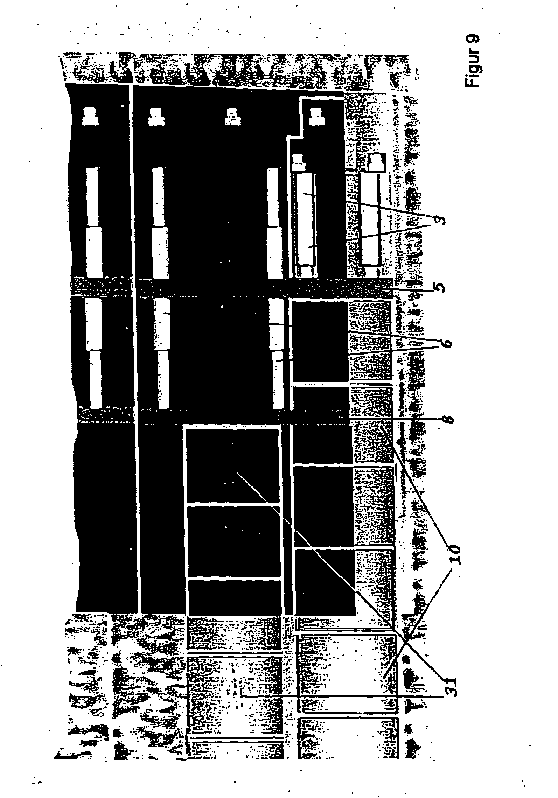

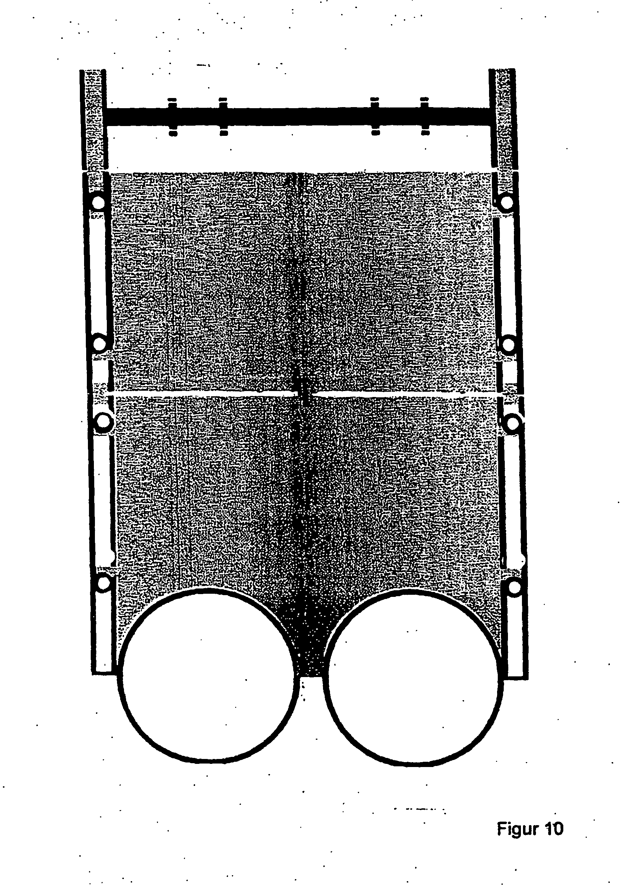

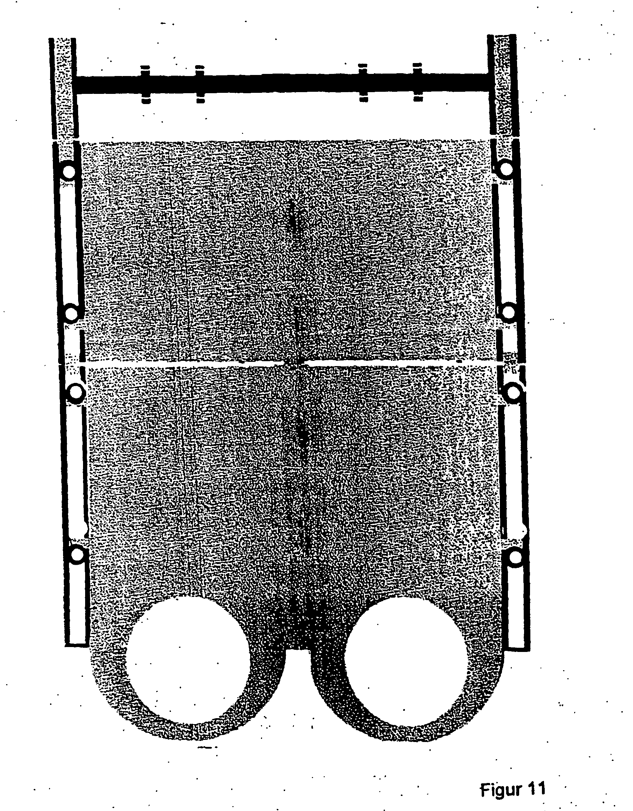

Figur 9 zeigt die gleichzeitige Verlegung von zwei Rohrleitungen in einer Momentaufnahme einer in Aktion befindlichen Verbaumaschine. Wichtig ist hierbei, zu sehen dass die beiden Rohrleitungen sehr exakt, und sogar mit einem entsprechenden Höhenabstand zueinander verlegt werden können. Die verlegten Rohre liegen also nicht direkt aufeinander, sondern beabstandet und sicher im Erdreich eingebettet. Figur 10 zeigt die Frontalansicht auf die Verdichterplatte bei einer zweifachen Rohrverlegung nebeneinander. Hierbei wird deutlich, dass bei nebeneinanderliegender zweifach Rohrverlegung nur ein gemeinsamer Verdichterhub notwenig ist. Figur 11 zeigt hierzu die Frontalansicht auf die entsprechende Druck und Schubplatte bei-dieser nebeneinanderliegenden zweifach Rohrverlegung. Auch hierbei wird nurein einziger gemeinsamer Arbeitshub notwendig.

### Bezugszeichenliste

1: integrierte Arbeitszylinder zur Steuerung des Verbaus
2: Steuerzylinder des Schneidschuhs
3: Hydraulikzylinder für Schneidschuhpresse
4: integrierte Arbeitszylinder zur Schub- und Druckplattenbetätigung
5: Druck- und Schubplatte
6: integrierte Arbeitszylinder zur Betätigung der Verdichterplatte
7: Schneidschuh-Schottwand
8: Verdichterplatte
9: Verbaubleche der Verdichtungskammer
10: bereits verlegte Betonrohre
11: Hohlkörper-Verbautafeln
12: Schneidschuh
13: Verbauspitzenpanzerung
14: Schneidschuhpresse
15: Schottwand der Druck- und Schubplatte
16: Verbauboden
17: Erdreichverdichtungsrichtung X
18: Vortriebsrichtung Y
19: Ausfahrrichtung Schneidschupresse Z
   **Hinweis:** Die Richtungen X, Y, und Z sind dabei nicht die orthogonalen kartesischen Koordinatenrichtungen, sondern Richtungen gemäß Zeichnung.
20: Verbaubleche der Aufsatzverdichtungskammer
21: Aufsatzverdichterplatte
22: Arbeitszylinder für Aufsatzverdichterplatte
23: Druck- und Schubplatte der Aufsatz Verbautafeln
24: Arbeitszylinder zur Betätigung der Druck- und Schubplatte der Aufsatz Verbautafeln
25: Arbeitszylinder für die Verbausteuerung der Aufsatzverbautafeln
26.: Verbauspitzenpanzerung des Aufsatzverbaus
27: Aufsatzverbautafeln
28: Verbauaussteifungen
29: demontierbare Aufsatztafeln
30: Erdreich
31: zweite verlegte Rohrleitung

## Patentansprüche

1. Verfahren zum Verlegen von Leitungsrohren, insbesondere von Kanalisationsrohren im Erdreich, mit mitlaufendem Verbau und integrierter Vortriebspresse bei welchem ein Verlegeschacht durch einen mit vorzutreibenden Verbau ins Erdreich getrieben und die Rohre nacheinander eingelegt und der Schacht hinter dem Verbau wiederverfüllt wird,
**dadurch gekennzeichnet,**
**dass** die Vorschubkräfte bzw die für den Vortrieb notwendigen Hydraulikdrücke der am Schneidschuh und innerhalb des Verbaus angeordneten Arbeitszylinder gemessen und auf die Einbaulage jedes Arbeitszylinders bezogen aufgezeichnet werden, und die Drücke zwischen der linken und der rechten Verbauseite verglichen werden, und dass bei Asymetrie ausserhalb einer vorgebbaren Toleranz die Vortriebbewegung der Verbaumaschine entweder automatisch gestoppt wird, oder automatisch eine Korrektursteuerung eingeleitet wird.

2. Verfahren nach Anspruch 1,
**dadurch gekennzeichnet,**
**dass** die Dichteasymetrien im Erdreich während des Vortriebes durch eine Korrelation von Hydraulikdruck- und Wegmessung ermittelt werden derart, dass daraufhin optimierte Betriebstdrücke für die jeweiligen Arbeitszylinder des Schneidschuhs und des Verbaus ermittelt und ausgesteuert werden.

3. Verfahren nach Anspruch 1 oder 2,
**dadurch gekennzeichnet,**
**dass** innerhalb des Verbaus der Schneidschuh zum bodenseitigen schneiden der nachfolgenden Rohrkontur sowohl gemeinsam mit dem Verbau als auch von demselben unabhängig gesteuert werden kann.

4. Verfahren nach Anspruch 3,
**dadurch gekennzeichnet,**
**dass** mittels Sensoren an der vortriebseitigen Spitze des Verbaus querlaufende Hindernisse bereits aus einem vorgebbaren Abstand zur Verbaumaschine erfasst werden können, und bei entsprechender Ortung daraufhin die Verbaumaschine automatisch gestoppt wird.

5. Verfahren nach Anspruch 1,
**dadurch gekennzeichnet,**
**dass** zwei übereinander- oder nebeneinanderliegende Rohre verlegt werden, indem das untere Rohr an das ggfs bereits zuvor verlegte Rohr in den Zwischenraum zwischen Druck-und Schubplatte eingelegt wird, und das obere Rohr direkt oberhalb des ersten Rohres an das ggfs zuvor verlegte obere Rohr eingelegt wird, und zuerst das wiederverfüllte Erdreich um das untere Rohr mittels einer unteren Verdichterplatte und dann das Erdreich um und über dem oberen verlegten Rohr mittels einer oberen Verdichterplatte zusammengeschoben wird.

6. Verfahren nach Anspruch 1,
**dadurch gekennzeichnet,**
**dass** zwei nebeneinanderliegende Rohre verlegt werden, indem diese nacheinander oder zeitgleich in die Verbaumaschine und damit in die Verlegegrube eingelegt werden, und in einem gemeinsamen Hub der Verdichterplatte das Erdreich über den verlegten Rohren zusammengeschoben wird.

7. Einrichtung zum Verlegen von Leitungsrohren, insbesondere von Kanalisationsrohren im Erdreich, mit mitlaufendem Verbau und integrierter Vortriebspresse bei welchem durch diese Verbaumaschine ein Verlegeschacht durch einen vorzutreibenden Verbau ins Erdreich getrieben und die Rohre nacheinander eingelegt und der Schacht hinter dem Verbau sogleich wiederverfüllt wird,
**dadurch gekennzeichnet,**
**dass** innerhalb der Arbeitszylinder (1, 3, 4, 6, 22, 24, 25) Sensoren angeordnet sind, über welche die Vorschubkräfte bzw die für den Vortrieb notwendigen Hydraulikdrücke der am Schneidschuh (12) der Verbaumaschine und innerhalb des Verbaus angeordneten Arbeitszylinder (1, 3, 4, 6, 22, 24, 25) gemessen und auf die Einbaulage jedes Arbeitszylinders bezogen elektronisch in einer Steuereinrichtung aufgezeichnet und die Drücke zwischen der linken und der rechten Verbauseite verglichen werden können, und dass bei Asymetrie ausserhalb einer vorgebbaren Toleranz die Vortriebbewegung der Verbaumaschine über die Steuerung automatisch gestoppt wird, oder automatisch eine Korrektursteuerung eingeleitet wird.

8. Einrichtung nach Anspruch 7,
**dadurch gekennzeichnet,**
**dass** die Dichteasymetrien im Erdreich während des Vortriebes durch eine Korrelation von Hydraulikdruck- und Wegmessung innerhalb der Steuerung berechnet werden, und die Wegmessung über optische, resistive oder Schallsensoren erfolgt.

9. Einrichtung nach Anspruch 7 oder 8,
**dadurch gekennzeichnet,**
**dass** innerhalb der Verbaumaschine mindestens eine darin hydraulisch bewegbare Schub- Verdichterplatte (8, 21) zur widerlagernden abstützung beim Vortrieb angeordnet ist, welche innerhalb der Verbaumaschine mit dort implementierten Arbeitszylindern (6, 22) vor- und rückwärts bewegbar ist.

10. Einrichtungnach Anspruch 9,
**dadurch gekennzeichnet,**
**dass** innerhalb der Verbaumaschine mindestens eine hydraulisch bewegbare Druck-und Schubplatte (5, 23) zur teilweisen widerlagernden Abstützung beim Vortrieb auf der bereits verlegten Rohrstrecke angeordnet ist, welche über Arbeitzylinder (4, 24) innerhalb des Verbaus vor- und rückwärts bewegbar ist bzw sind.

11. Einrichtung nach Anspruch 7
**dadurch gekennzeichnet,**
**dass** innerhalb des Schneidschuhs (12) ein öffenbares Schottwand (7) integriert ist.

12. Einrichtung nach Anspruch 9
**dadurch gekennzeichnet,**
**dass** innerhalb Schub- Nerdichterplatte (8, 21) ebenfalls eine öffenbare Schottwand (15) integriert ist.

13. Einrichtung nach Anspruch 7
**dadurch gekennzeichnet,**
**dass** in der Verbaumaschine zumindest ein Teil der Arbeitszylinder innerhalb der Verbautafelwand bzw der Verbautafeln (11) integriert angeordnet sind.

14. Einrichtung nach Anspruch 13,
**dadurch gekennzeichnet,**
**dass** die Verbautafelwand aus mehreren gelenkig miteinander verbundenen Verbautafeln (11) besteht, und dass die einzelnen Verbautafeln (11) über die integrierten Arbeitszylinder (1, 4, 6, 22, 24, 25) kontrolliert und gesteuert bewegbar sind.

15. Einrichtung nach Anspruch 11 und 12,
**dadurch gekennzeichnet,**
**dass** in den Verbautafeln (11) und/oder im Schneidschuh (12) und/oder im Verbauboden (16) Öffnungen zum Anschluss von Wasserpumpmitteln vorgesehen sind.

16. Einrichtung nach dem Anspruch 7,
**dadurch gekennzeichnet,**
**daß** die Verbautafeln (11) mit Injektionsöffnungen versehen sind, zur Einbringung von Schmierstoffen zwischen Schacht-Erdreich und Verbautafelaußenwandung mittels einer Schmierstoffdosiereinrichtung, die in Abhängigkeit zu den ermittelten, für den Vortrieb notwendigen Steuerdrücke der Arbeitszylinder, die besagten Schmierstoffe dosiert durch die Injektionsöffnungen befördern.

17. Verwendung von Tonpulver als Schmierstoff bei einer Einrichtung oder einem Verfahren der Ansprüche 7 bis 16 bzw Ansprüche 1 bis 6.

## Claims

1. Method of laying conduit pipes, in particular sewage pipes, in the earth, with follow-on sheeting and integrated driving jack, in which method a laying shaft is driven into the earth through sheeting to be advanced and the pipes are inserted one after the other, and the shaft is re-filled behind the sheeting, **characterized in that** the feed forces or the hydraulic pressures, necessary for the advance, of the working cylinders arranged on the cutting shoe and inside the sheeting are measured and are recorded in relation to the installation position of each working cylinder, and the pressures between the left-hand and the right-hand sheeting side are compared, and **in that**, in the event of asymmetry outside a predeterminable tolerance, either the advance movement of the sheeting machine is automatically stopped or correction control is automatically initiated.

2. Method according to Claim 1, **characterized in that** the density asymmetry in the earth during the advance is determined by a correlation of hydraulic pressure measurement and displacement measurement in such a way that operating forces optimized as a result are determined and modulated for the respective working cylinders of the cutting shoe and of the sheeting.

3. Method according to Claim 1 or 2, **characterized in that**, inside the sheeting, the cutting shoe for cutting the following pipe contour on the base side can be controlled both together with the sheeting and independently of the latter.

4. Method according to Claim 3, **characterized in that** transversely running obstacles can already be detected from a predeterminable distance from the sheeting machine by means of sensors at the advance-side tip of the sheeting, and, when the position is accordingly determined, the sheeting machine is thereupon stopped automatically.

5. Method according to Claim 1, **characterized in that** two pipes lying one above the other or lying side by side are laid by the bottom pipe being inserted into the space between pressure and thrust plate up to the pipe possibly already laid beforehand and by the top pipe being inserted directly above the first pipe up to the top pipe possibly laid beforehand, and by the earth that is poured in again first of all being pushed together around the bottom pipe by means of a bottom compacting plate and then by the earth being pushed together around and above the top laid pipe by means of a top compacting plate.

6. Method according to Claim 1, **characterized in that** two pipes lying side by side are laid by being placed one after the other or at the same time into the sheeting machine and thus into the laying pit, and by the earth being pushed together over the laid pipes in a joint stroke of the compacting plate.

7. Apparatus for laying conduit pipes, in particular sewage pipes, in the earth, with follow-on sheeting and integrated driving jack, in which a laying shaft is driven by this sheeting machine into the earth through sheeting to be advanced and the pipes are inserted one after the other, and the shaft is re-filled behind the sheeting immediately, **characterized in that** sensors are arranged within the working cylinders (1, 3, 4, 6, 22, 24, 25), via which the feed forces or the hydraulic pressures, necessary for the advance, of the working cylinders (1, 3, 4, 6, 22, 24, 25) arranged on the cutting shoe (12) of the sheeting machine and inside the sheeting are measured and are recorded electronically in a control device in relation to the installation position of each working cylinder, and the pressures between the left-hand and the right-hand sheeting side can be compared, and **in that**, in the event of asymmetry outside a predeterminable tolerance, either the advance movement of the sheeting machine is automatically stopped via the control system or correction control is automatically initiated.

8. Apparatus according to Claim 7, **characterized in that** the density asymmetry in the earth during the advance is calculated by a correlation of hydraulic pressure measurement and displacement measurement inside the control system, and the displacement measurement is effected via optical, resistive or acoustic sensors.

9. Apparatus according to Claim 7 or 8,
**characterized in that** at least one thrust/compacting plate (8, 21) for the abutting support during the advance is arranged inside the sheeting machine and is hydraulically movable therein, said thrust/compacting plate (8, 21) being movable forward and backward inside the sheeting machine by means of working cylinders (6, 22) implemented there.

10. Apparatus according to Claim 9, **characterized in that** at least one hydraulically movable pressure and thrust plate (5, 23) for the partial abutting support during the advance on the already laid pipe section is arranged inside the sheeting machine, said pressure and thrust plate(s) (5, 23) being movable forward and backward via working cylinders (4, 24) inside the sheeting.

11. Apparatus according to Claim 7, **characterized in that** a bulkhead partition (7) which can be opened is integrated inside the cutting shoe (12).

12. Apparatus according to Claim 9, **characterized in that** a bulkhead partition (15) which can be opened is likewise integrated inside the thrust/compacting plate (8, 21).

13. Apparatus according to Claim 7, **characterized in that** at least some of the working cylinders are arranged so as to be integrated inside the sheeting panel wall or the sheeting panels (11) in the sheeting machine.

14. Apparatus according to Claim 13, **characterized in that** the sheeting panel wall consists of a plurality of sheeting panels (11) connected to one another in an articulated manner, and **in that** the individual sheeting panels (11) can be moved in a monitored and controlled manner via the integrated working cylinders (1, 4, 6, 22, 24, 25).

15. Apparatus according to Claims 11 and 12, **characterized in that** openings for the connection of water-pumping means are provided in the sheeting panels (11) and/or in the cutting shoe (12) and/or in the sheeting base (16).

16. Apparatus according to Claim 7, **characterized in that** the sheeting panels (11) are provided with injection openings for introducing lubricants between shaft/earth and sheeting-panel outer wall by means of a lubricant metering device which delivers said lubricants through the injection openings in a metered manner as a function of the determined control pressures, necessary for the advance, of the working cylinders.

17. Use of clay powder as lubricant in an apparatus or a method of Claims 7 to 16 or Claims 1 to 6, respectively.

## Revendications

1. Procédé pour la pose de conduites, en particulier de canalisations dans la terre, avec boisage déplaçable et presse de poussée intégrée, dans lequel on enfonce un puits de pose dans le sol au moyen d'un boisage à pousser et on pose les conduites les unes après les autres et on comble ensuite le puits après le boisage, **caractérisé en ce que** l'on mesure les forces de poussée ou les pressions hydrauliques, nécessaires pour la poussée, des vérins d'entraînement disposés sur le sabot tranchant et à l'intérieur du boisage et on les enregistre par rapport à la position de montage de chaque vérin d'entraînement, et on compare les pressions entre le côté gauche et le côté droit du boisage, et **en ce que**, en cas d'asymétrie au-delà d'une tolérance prédéterminable, soit on arrête automatiquement le mouvement de poussée de la machine de boisage soit on applique automatiquement une commande de correction.

2. Procédé selon la revendication 1, **caractérisé en ce que** l'on détermine les asymétries de densité dans la terre pendant la poussée par une corrélation entre la mesure de la pression hydraulique et la mesure du trajet, de façon à déterminer alors et à commander des pressions de fonctionnement optimisées pour les vérins d'entraînement respectifs du sabot tranchant et du boisage.

3. Procédé selon la revendication 1 ou 2,
**caractérisé en ce que** l'on peut commander le sabot tranchant à l'intérieur du boisage pour trancher au fond le contour de conduite qui suit soit en même temps que le boisage soit aussi indépendamment de celui-ci.

4. Procédé selon la revendication 3, **caractérisé en ce que** l'on peut détecter des obstacles transversaux, déjà à une distance prédéterminable de la machine de boisage, au moyen de capteurs placés sur la pointe côté poussée du boisage, et on arrête dès lors automatiquement la machine de boisage pour une localisation correspondante.

5. Procédé selon la revendication 1, **caractérisé en ce que** l'on pose deux conduites superposées ou juxtaposées, en ajoutant la conduite inférieure à la conduite éventuellement déjà posée auparavant, dans l'espace intermédiaire entre plaque de pression et plaque de poussée, et en ajoutant la conduite supérieure directement au-dessus de la première conduite à la conduite éventuellement déjà posée auparavant, et on compacte d'abord la zone de terre comblée autour de la conduite inférieure au moyen d'une plaque de damage inférieure et ensuite la zone de terre autour et au-dessus de la conduite supérieure au moyen d'une plaque de damage supérieure.

6. Procédé selon la revendication 1, **caractérisé en ce que** l'on pose deux conduites juxtaposées, en ajoutant celles-ci l'une après l'autre ou en même temps dans la machine de boisage et donc dans la tranchée de pose, et on compacte la zone de terre au-dessus des conduites posées au moyen d'une seule course de la plaque de damage.

7. Equipement pour la pose de conduites, en particulier de canalisations dans la terre, avec un boisage déplaçable et une presse de poussée intégrée, dans lequel, avec cette machine de boisage, un puits de pose est enfoncé dans la terre au moyen d'un boisage à pousser et les conduites sont posées l'une à côté de l'autre et le puits est immédiatement comblé après le boisage, **caractérisé en ce que** des capteurs sont disposés à l'intérieur des vérins d'entraînement (1, 3, 4, 6, 22, 24, 25), au moyen desquels on mesure les forces de poussée ou les pressions hydrauliques, nécessaires pour la poussée, des vérins d'entraînement (1, 3, 4, 6, 22, 24, 25) disposés sur le sabot tranchant (12) de la machine de boisage et à l'intérieur du boisage et on les enregistre sous forme électronique dans un dispositif de commande par rapport à la position de montage de chaque vérin d'entraînement, et on peut comparer les pressions entre le côté gauche et le côté droit du boisage, et **en ce que**, en cas d'asymétrie au-delà d'une tolérance prédéterminable, le mouvement de poussée de la machine de boisage est arrêté automatiquement par la commande ou une commande de correction est appliquée automatiquement.

8. Equipement selon la revendication 7, **caractérisé en ce que** les asymétries de densité dans la terre pendant la poussée sont calculées à l'intérieur de la commande par une corrélation entre la mesure de la pression hydraulique et la mesure du trajet, et la mesure du trajet est effectuée au moyen de capteurs optiques, résistifs ou acoustiques.

9. Equipement selon la revendication 7 ou 8, **caractérisé en ce qu'**au moins une plaque de poussée/damage (8, 21) mobile par voie hydraulique est disposée à l'intérieur de la machine de boisage pour assurer l'appui arrière pendant la poussée, laquelle est déplaçable vers l'avant et vers l'arrière à l'intérieur de la machine de boisage au moyen de vérins d'entraînement (6, 22) installés dans celle-ci.

10. Equipement selon la revendication 9, **caractérisé en ce qu'**au moins une plaque de pression et de poussée (5, 23) mobile par voie hydraulique est disposée à l'intérieur de la machine de boisage pour assurer l'appui arrière partiel, lors de la poussée, sur le tronçon de conduites déjà posé, laquelle est déplaçable vers l'avant et vers l'arrière à l'intérieur de la machine de boisage à l'aide de vérins d'entraînement (4, 24).

11. Equipement selon la revendication 7, **caractérisé en ce qu'**une cloison (7) pouvant s'ouvrir est intégrée à l'intérieur du sabot tranchant (12).

12. Equipement selon la revendication 9, **caractérisé en ce qu'**une cloison (15) pouvant également s'ouvrir est intégrée à l'intérieur de la plaque de poussée/damage (8, 21).

13. Equipement selon la revendication 7, **caractérisé en ce qu'**au moins une partie des vérins d'entraînement, intégrés à l'intérieur de la table de boisage ou des éléments de table de boisage (11), sont disposés dans la machine de boisage.

14. Equipement selon la revendication 13, **caractérisé en ce que** la table de boisage se compose de plusieurs éléments de table de boisage (11) articulés les uns aux autres, et **en ce que** les éléments de table de boisage individuels (11) sont déplaçables de façon contrôlée et commandée au moyen des vérins d'entraînement intégrés (1, 4, 6, 22, 24, 25).

15. Equipement selon la revendication 11 et 12, **caractérisé en ce qu'**il est prévu dans les éléments de table de boisage (11) et/ou dans le sabot tranchant (12) et/ou dans le fond de boisage (16) des ouvertures permettant le raccordement de moyens de pompage d'eau.

16. Equipement selon la revendication 7, **caractérisé en ce qu'**une les éléments de table de boisage (11) sont pourvus d'orifices d'injection, permettant d'introduire des lubrifiants entre la terre et le puits et la paroi extérieure de la table de boisage au moyen d'un dispositif de dosage de lubrifiant, qui amènent lesdits lubrifiants dosés à travers les orifices d'injection en fonction des pressions de commande des vérins d'entraînement, nécessaires pour la poussée, qui ont été déterminées.

17. Utilisation de poudre d'argile comme lubrifiant dans un équipement ou un procédé selon les revendications 7 à 16 ou les revendications 1 à 6.
